# EUROPEAN PATENT SPECIFICATION

(11) **EP 3 087 836 B1**
(45) Date of publication and mention of the grant of the patent: **13.02.2019**
(21) Application number: 15165373.0
(22) Date of filing: 28.04.2015
(51) Int. Cl.: A01N 43/707, A01N 47/36, A01N 43/90

(54) **HERBICIDAL COMPOSITION AND METHOD FOR CONTROLLING PLANT GROWTH**
HERBIZIDE ZUSAMMENSETZUNG UND VERFAHREN ZUR BEKÄMPFUNG VON PFLANZENWACHSTUM
COMPOSITION HERBICIDE ET PROCÉDÉ DE CONTRÔLE DES MALADIES DE PLANTES

(43) Date of publication of application: 02.11.2016
(73) Proprietor: Rotam Agrochem International Company Limited, Chai Wan (HK)
(72) Inventor: Bristow, James Timothy, Chai Wan (HK)
(74) Representative: Straus, Alexander

(56) References cited:
- WO-A1-2015/078243
- CN-A- 101 530 105
- CN-A- 102 273 466
- SHARMA, RAJVIR ET AL: "Efficacy of sulfonylurea herbicides alone and in combination with metribuzin for control of wild canary grass (Phalaris minor Retz.) in wheat (Triticum aestivum L. ) and their residual toxicity to mungbean", PESTICIDE RESEARCH JOURNAL , 19(2), 210-214EFFICACY OF SULFONYLUREA HERBICIDES ALONE AND IN COMBINATION WITH METRIBUZIN FOR CONTROL OF WILD CANARY GRASS (PHALARIS MINOR RETZ.) IN WHEAT (TRITICUM AESTIVUM L. ) AND THEIR RESIDUAL TOXICITY TO MUNGBEAN, vol. 19, no. 2, December 2007 (2007-12), pages 210-214, XP009185302,
- BARNES, JEFF W. ET AL: "Preemergence weed control in soybean with cloransulam", WEED TECHNOLOGY , 18(4), 1077-1090 CODEN: WETEE9; ISSN: 0890-037X, vol. 18, 2004, pages 1077-1090, XP009185294, DOI: 10.1614/WT-03-254R1 10.1614/WT-03-254R1
- RONALD F KRAUSZ ET AL: "Winter Annual Weed Control with Fall-Applied Corn (Zea mays) Herbicides", WEED TECHNOLOGY, CHAMPAIGN, IL, US, vol. 17, no. 3, 2003, pages 516-520, XP009185293, ISSN: 0890-037X
- DATABASE CA [Online] CHEMICAL ABSTRACTS SERVICE, COLUMBUS, OHIO, US; ZHANG, WEI: "Florasulam and thifensulfuron-methyl-containing herbicidal formulations", XP002744584, retrieved from STN Database accession no. 2012:101260 & CN 102 318 631 A (SHAANXI MEIBANG PESTICIDE CO., LTD., PEOP. REP. CHINA) 18 January 2012 (2012-01-18)
- DATABASE CA [Online] CHEMICAL ABSTRACTS SERVICE, COLUMBUS, OHIO, US; XUE, JINCHUN ET AL: "Herbicide composition containing sulfonylureas, pyridines and penoxsulam and application thereof", XP002742048, retrieved from STN Database accession no. 2009:1153798 & CN 101 530 105 A (BEIJING YINGTAI JIAHE SCIENCE AND TECHNOLOGY CO., LTD., PEOP. REP. CHI) 16 September 2009 (2009-09-16)
- DATABASE CA [Online] CHEMICAL ABSTRACTS SERVICE, COLUMBUS, OHIO, US; USKOV, ALEXANDR MIKHAILOVICH ET AL: "Herbicidal composition and method for weed control in crops", XP002744585, retrieved from STN Database accession no. 2013:793853 & RU 2 488 999 C2 (ZAO FIRMA "AVGUST", RUSSIA) 10 August 2013 (2013-08-10)

## Description

The present invention relates to a herbicidal composition. The invention also relates to a method of controlling the growth of undesirable vegetation, particularly in crops, including using the aforementioned composition.

The protection of crops from undesirable vegetation, which inhibits crop growth, is a constantly recurring problem in agriculture. To solve this problem, researchers are trying to produce an extensive variety of chemicals and chemical formulations effective in the control of such undesirable growth. Chemical herbicides of many types have been disclosed in the literature and a large number are in commercial use.

Some herbicidal active ingredients have been shown to be more effective when applied in combination rather than applied individually, this effect being referred to as "synergism." According to Herbicide Handbook of the Weed Science Society of America, Seventh Edition, 1994, page 318, "synergism" is an interaction of two or more factors such that the effect when combined is greater than the predicted effect based on the response to each factor applied separately.

Metribuzin, thifensulfuron-methyl, tribenuron-methyl and triazolopyrimidines are compounds known to be herbicidally active and to be of use in the control of unwanted plant growth. It has now surprisingly been found that the combinations of metribuzin; thifensulfuron-methyl or tribenuron-methyl; and optionally triazolopyrimidines display a synergistic effect in the control of plant growth when applied in combination, for example in a composition comprising these compounds or when applied together to a locus to be treated.

The herbicidal active ingredients forming the herbicidal composition and used in the method of this invention are independently known in the art for their effects on plant growth. They are all disclosed in The Pesticides Manual, Twelfth Edition, 2000, published by The British Crop Protection Council. They are also commercially available.

The synergistic effects of the combinations of metribuzin; thifensulfuron-methyl or tribenuron-methyl; and optionally triazolopyrimidines forming the basis of the present invention can provide one or more of a number of advantages over the use of each component (A) metribuzin, (B) thifensulfuron-methyl or tribenuron-methyl and optionally (C) triazolopyrimidines. The rates of application of each component can be markedly reduced, when used in combination, while maintaining a high level of herbicidal efficacy. The treatment using these combinations can exhibit a considerably broader weed spectrum than does either of the components when used alone. The use of the combinations can have the potential to control weed species at a low application rate, in particular a rate of application at which the individual components alone are ineffective. The use of a composition comprising the aforementioned active components can have a speed of action which is faster than that which would have been predicted from the speed of each component used individually.

In a first aspect, the present invention provides a composition comprising a herbicidally effective amount of (A) metribuzin, (B) thifensulfuron-methyl and/or tribenuron-methyl and optionally (C) one or more triazolopyrimidines.

The composition contains a herbicidally effective amount of a combination of (A) metribuzin, (B) thifensulfuron-methyl or tribenuron-methyl and optionally (C) triazolopyrimidines. "Herbicide" as used herein, refers to a compound that controls the growth of plants. "Herbicidally effective amount" as used herein, refers to the quantity of such a compound or combination of such compounds that is capable of producing a controlling effect on the growth of plants. The controlling effects include all deviation from the natural development of the target plants, for example killing, retardation of one or more aspects of the development and growth of the plant, leaf burn, albinism, dwarfing and the like. The term "plants" refers to all physical parts of a plant, including shoots, leaves, needles, stalks, stems, fruit bodies, fruits, seeds, roots, tubers and rhizomes.

Metribuzin (IUPAC name: 4-amino-6-tert-butyl-4,5-dihydro-3-methylthio-1,2,4-triazin-5-one; 4-amino-6-tert-butyl-3-methylthio-1,2,4-triazin-5(4H)-one) has the following chemical structure:

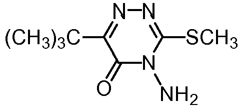

Metribuzin is an inhibitor of photosynthesis. It can be absorbed by roots and leaves and then translocate in the xylem. It can control of grasses and broad-leaved weeds. Thifensulfuron-methyl and tribenuron-methyl belong to sulfonylurea family. They are branched chain amino acid synthesis (ALS) inhibitors.

They act by inhibiting biosynthesis of the essential amino acids valine and isoleucine, therefore they stops cell division of the plant and plant growth.

Triazolopyrimidine is an inhibitor of the acetolactase synthase enzyme (ALS) in the target plant. It inhibits the synthesis of branched chain amino acids, such as leucine, isoleucine and valine in the target plants. Triazolopyrimidine can be selected from a group of cloransulam, diclosulam, florasulam, flumetsulam and metosulam.

BARNES, JEFF W. ET AL: "Preemergence weed control in soybean with cloransulam",WEED TECHNOLOGY , 18(4), 2004, 1077-1090 discloses herbicidal compositions of metribuzin with cloramsulam.

RONALD F KRAUSZ ET AL: "Winter Annual Weed Control with Fall-Applied Corn (Zea mays) Herbicides",WEED TECHNOLOGY, 17(3), 2003, 516-520 discloses herbicidal compositions of metribuzin with flumetsulam.

CN102273 discloses synergistic compositions of metribuzim with florasulam.

CN102318631 discloses synergistic herbicidal compositions of thifensulfuron-methyl and florasulam.

CN101530105 discloses synergistic herbicidal compositions of thifensulfuron-methyl and penoxsulam.

WO2013073996 discloses synergistic herbicidal compositions of tribenuron-methyl and florasulam.

As noted above, the present invention relates to a synergistic herbicidal composition comprising a herbicidally effective amount of (A) metribuzin, (B) thifensulfuron-methyl and/or tribenuron-methyl and optionally (C) one or more triazolopyrimidines for controlling the growth of undesirable vegetation.

Preferably, the combinations of components are:
(A) metribuzin, (B) thifensulfuron-methyl;
(A) metribuzin, (B) tribenuron-methyl;
(A) metribuzin, (B) thifensulfuron-methyl, (C) cloransulam;
(A) metribuzin, (B) tribenuron-methyl, (C) cloransulam;
(A) metribuzin, (B) thifensulfuron-methyl, (C) diclosulam;
(A) metribuzin, (B) tribenuron-methyl, (C) diclosulam;
(A) metribuzin, (B) thifensulfuron-methyl, (C) florasulam;
(A) metribuzin, (B) tribenuron-methyl, (C) florasulam;
(A) metribuzin, (B) thifensulfuron-methyl, (C) flumetsulam;
(A) metribuzin, (B) tribenuron-methyl, (C) flumetsulam;
(A) metribuzin, (B) thifensulfuron-methyl, (C) metosulam; and
(A) metribuzin, (B) tribenuron-methyl, (C) metosulam.

More preferably, the combinations of components are:
(A) metribuzin, (B) thifensulfuron-methyl;
(A) metribuzin, (B) tribenuron-methyl;
(A) metribuzin, (B) thifensulfuron-methyl, (C) florasulam;
(A) metribuzin, (B) tribenuron-methyl, (C) florasulam.

The present invention also provides a method of controlling undesirable vegetation in plants comprising applying to the vegetation or to the locus thereof a herbicidally effective amount of the herbicidal composition of the first aspect of the present invention.

In a still further aspect, the present invention provides a method of controlling plant growth at a locus comprising applying to the locus herbicidally effective amounts of the present composition.

In a still further aspect, the present invention provides the use of the present composition in the control of plant growth at a locus.

The compositions and methods of the present invention are useful in controlling undesirable vegetation in a range of crops, for example cereals (wheat, barley, rye, oats, maize, rice, sorghum, triticale and related crops); fruit, such as pomes, stone fruit and soft fruit, such as apples, grapes, pears, plums, peaches, almonds, pistachio, cherries, and berries, for example strawberries, raspberries and blackberries, bell pepper, red pepper; leguminous plants (beans, lentils, peas, soybeans); oil plants (rape, mustard, sunflowers); cucurbitaceae (marrows, cucumbers, melons); fibre plants (cotton, flax, hemp, jute); citrus, such as calamondin, citrus citron, citrus hybrids (includes chironja, tangelo, tangor), grapefruit, kumquat, lemon, lime, mandarin (tangerine), sour orange, sweet orange, pummelo, and satsuma mandarin; vegetables (spinach, lettuce, asparagus, cabbages, carrots, onions, tomatoes, potatoes, paprika); coffee; as well as ornamentals (flowers, such as rose, shrubs, broad-leaved trees and evergreens, such as conifers), preferably cereals, more preferably wheat, barley, rye, oats and triticale. The control of undesirable vegetation in such crops may be achieved by applying to the locus the active compounds in suitable amounts. The active compounds may be applied to the locus together or separately. If applied separately, the active compounds may be applied at the same time and/or consecutively. The control may comprise applying to the vegetation or the locus thereof a herbicidally effective amount of the herbicidal composition.

The species spectrums of (A) metribuzin, (B) thifensulfuron-methyl and/or tribenuron-methyl and optionally (C) one or more triazolopyrimidines, that is, the weed species that the respective compounds control, are broad and highly complementary. Metribuzin is active in controlling grasses and broad leaf weeds. Thifensulfuron-methyl, tribenuron-methyl and triazolopyrimidines are effective in controlling broadleaved weeds. It has been surprisingly found that a combination of (A) metribuzin, (B) one or more of thifensulfuron-methyl or tribenuron-methyl and optionally (C) one or more triazolopyrimidines exhibits a synergistic action in the control of many weeds. The weeds particularly susceptible to control by the present combination or composition, respectively include, but are not limit to,

African turnip weed (Sisymbrium thellungii), Amsinckia/Yellow burweed (Amsinckia spp.), Ball mustard (Neslia paniculata), Black-bindweed, Black-grass, Boggabri weed/Dwarf amaranth (Amaranthus macrocarpus), Brassica napus (volunteer oilseed rape), Broadleaf dock, Bugloss, Calomba daisy (Pentzia suffruticosa), Cape tulip (Homeria spp.), Charlock (Sinapsis arvensis), Chickpeas (Volunteer) (Cicer arietinum), Chicory (Cichorium intybus), Cleavers (Galium aparine), Clover (Subterranean) (Trifolium subterraneum), common chickweed (Stellaria media), Common couch, Common Field-speedwell, Common Hemp-nettle, Common Orache, Common sowthistle (Sonchus oleraceus), Corn Marigold, Cutleaf mignonette (Reseda lutea), Dead-nettle (henbit), Denseflower fumitory (Fumaria densiflora), Dock (Broadleaf) (Rumex obtusifolius), Faba beans (Vicia faba), Fat-hen (Chenopodium album), Field Pansy, Field peas (Pisum sativum), Forget-me-not, Fumitory, Geranium spp. (cranesbill), Groundsel, Hare's ear/Treacle mustard (Conringia orientalis), Hedge mustard (Sisymbrium officinale), Hemp-nettle, Hogweed/Wireweed (Polygonum aviculare), Indian hedge mustard (Sisymbrium orientale), Knotgrass, Large flowered, Lincoln weed (Diplotaxis tenuifolia), Lupins (Lupinus albus), Mallee catchfly (Silene apetala), Mayweed, Meadow-grass (Annual), Medic (Medicago spp.), Mercury (Annual), Mignonette (Wild), Nettle (Small), New Zealand spinach (Tetragonia tetragonoides), Nightshade (Black), Oilseed rape volunteers, Orache, Pansy (field), parsley-piert, Parthenium weed (Pathenium hysterophorus), Paterson's curse/ Salvation Jane (Echium plantagineum), Penny-cress (Field), Persicaria (Pale), Pimpernel (Scarlet), Poppy (Papaver rhoeas), Prickly lettuce (Lactuca serriola), Radish (Wild), Red deadnettle (Lamium purpureum), Red pigweed (Portulaca oleracea), Redshank (Polygonum persicaria), Rough poppy (Papaver hybridum), Rye-grass (Perennial), Saltbush (Atriplex muelleri), Scanted mayweed (Matricaria chamomilla), Scentless mayweed (Matricaria perforata), Shephard's-needle, Shepherd's purse (Capsella bursa-pastoris), Skeleton weed (Suppression only) (Chondrilla juncea), Slender celery (Apium leptophyllum), Smallflower fumitory (Fumaria parviflora), Sorrel (Rumex acetoxella), Sorrel (Sheep's), Soursob (Oxalis pes-caprae), Sow-thistle (Smooth), Speedwells, Spiny Emex/ Doublegee/ Threecornered Jack (s) (Emex australis), Spurge (Sun), Spurrey (Corn), Stagger weed (Stachys arvensis), Stocksbill/Wild geranium (Erodium spp.), Thistle (Creeping), Turnip weed (Rapistrum rugosum), Viola arvensis (field pansy), Volunteer oilseed rape (Brassica napus), Volunteer sunflower (Helianthus annuus), Wild/Crow garlic (Allium vineale), Wild radish (Raphanus raphanistrum), Wild turnip (Brassica tournefortii), Wild-Oat.

The compositions and/or method of this invention can be used more particularly for controlling the growth of

Amsinckia/Yellow burweed (Amsinckia spp.), Brassica napus (volunteer oilseed rape), Broadleaf dock, Charlock (Sinapsis arvensis), Cleavers (Galium aparine), common chickweed (Stellaria media), Common sowthistle (Sonchus oleraceus), Dead-nettle (henbit), Dock (Broadleaf) (Rumex obtusifolius), Faba beans (Vicia faba), Fat-hen (Chenopodium album), Forget-me-not, Fumitory, Groundsel, Mayweed, Poppy (Papaver rhoeas), Red deadnette, Redshank (Polygonum persicaria), Shepherd's purse (Capsella bursa-pastoris), Speedwells, Spurrey (Corn), Thistle (Creeping), Viola arvensis (field pansy), Volunteer sunflower (Helianthus annuus), Scanted mayweed (Matricaria chamomilla), Scentless mayweed (Matricaria perforata).

The synergistic effects of (A) metribuzin, (B) thifensulfuron-methyl or tribenuron-methyl and optionally (C) triazolopyrimidines when combined or used together are exhibited in a wide range of weight ratios of the components.

In the compositions of this invention or in use, the weight ratio of (A) to (B) is preferably up to 1000:1, more preferably up to 800:1, still more preferably up to 400:1, more preferably still up to 200:1, with a ratio up to 150:1, more particularly up to 100:1, being preferred in many embodiments.

The weight ratio of (A) to (B) is preferably greater than 1:20, more preferably greater than 1:15, still more preferably greater than 1:10, more preferably still greater than 1:5, with a ratio of about 1:1 being suitable for many embodiments.

The weight ratio of (A) to (B) preferably lies within the range of from 1000:1 to 1:20. Preferably, the weight ratio of (A) and (B) is from 500:1 to 1:15, more preferably from 400:1 to 1:1, still more preferably from 300:1 to 1:1, more preferably still from about 200:1 to about 1:1.

In the compositions of this invention or in use, the weight ratio of (A) to (C) is preferably up to 1000:1, more preferably up to 800:1, still more preferably up to 600:1, more preferably still up to 400:1, with a ratio up to 200:1, more particularly up to 150:1, being preferred in many embodiments.

The weight ratio of (A) to (C) is preferably greater than 5:1, more preferably greater than 10:1, still more preferably greater than 20:1, more preferably still greater than 25:1.

The weight ratio of (A) to (C) preferably lies within the range of from 1000:1 to 5:1. Preferably, the weight ratio of (A) and (B) is from 800:1 to 1:1, more preferably from 600:1 to 1:1, more preferably from 400:1 to 5:1.

The active components may be present in the composition of the present invention in a wide range of amounts. In preferred embodiments, the total amount of (A), (B) and optionally (C) is from 5% to 99% by weight of the synergistic composition. Preferably, the composition comprises from 5% to 80% by weight of (A), from 0.05% to 50% by weight of (B), and optionally from 0.05% to 50% by weight of (C).

In general, the application rate of the active ingredients (A), (B) and/or (C) depends on such factors as the type of weed, type of crop plant, soil type, season, climate, soil ecology and various other factors. The application rate of the composition for a given set of conditions can readily be determined by routine trials.

In general the composition or the method of the present invention can be applied at an application rate of from 10 grams/hectare (g/ha) to 5000 g/ha of the total amount of active ingredients (A), (B) and/or (C) being applied. Preferably, the application rate is from 30 g/ha to 1000 g/ha of the active ingredients.

According to this invention, the application rate of the active ingredients may be from 5 to 2000 g/ha of (A), from 0.2 to 100 g/ha of (B) and/or from 0.1 to 10 g/ha of (C). Preferably, the application rate of the active ingredients is from 50 to 400 g/ha of (A), from 2 to 50 g/ha of (B) and from 1 to 10 g/ha of (C).

As noted above, in the present invention, components (A), (B) and/or (C) may be applied either separately or combined as part of a two-part herbicidal system, such as the composition of the present invention.

The compositions of this invention can be formulated in conventional manner, for example by mixing (A), (B) and/or (C) with appropriate auxiliaries. Suitable auxiliaries will depend upon such factors as the type of formulation and will be known to the person skilled in the art.

In particular, the composition may further comprise one or more auxiliaries selected from extenders, carriers, solvents, surfactants, stabilizers, anti-foaming agents, anti-freezing agents, preservatives, antioxidants, colorants, thickeners, solid adherents, fillers, wetting agents, dispersing agents, lubricants, anticaking agents, deformers and diluents. Such auxiliaries are known in the art and are commercially available. Their use in the formulation of the compositions of the present invention will be apparent to the person skilled in the art.

Suitable formulations for applying a combination of components (A), (B) and/or (C) include water-soluble concentrates (SL), emulsifiable concentrates (EC), emulsions (EW), micro-emulsions (ME), suspension concentrates (SC), oil-based suspension concentrates (OD), flowable suspensions (FS), water-dispersible granules (WG), water-soluble granules (SG), water-dispersible powders (WP), water soluble powders (SP), granules (GR), encapsulated granules (CG), fine granules (FG), macrogranules (GG), aqueous suspo-emulsions (SE), capsule suspensions (CS) and microgranules (MG). Preferred formulations are suspension concentrates (SC), water-soluble granules (SG), water-dispersible granules (WG) and oil-based suspension concentrates (OD). The present inventors have found that the combinations of the named active ingredients may be formulated in any type of granules as mentioned above, including water dispersible granules, which rapidly disintegrate even without using urea, one or more urea modifier and a base.

The composition may comprise one or more inert fillers. Such inert fillers are known in the art and available commercially. Suitable fillers include, for example, natural ground minerals, such as kaolins, aluminas, talc, chalk, quartz, attapulgite, montmorillonite, and diatomaceous earth, or synthetic ground minerals, such as highly dispersed silicic acid, aluminum oxide, silicates, and calcium phosphates and calcium hydrogen phosphates. Suitable inert fillers for granules include, for example, crushed and fractionated natural minerals, such as calcite, marble, pumice, sepiolite, and dolomite, or synthetic granules of inorganic and organic ground materials, as well as granules of organic material, such as sawdust, coconut husks, corn cobs, and tobacco stalks.

The composition may optionally include one or more surfactants which are preferably non-ionic, cationic and/or anionic in nature and surfactant mixtures which have good emulsifying, dispersing and wetting properties, depending upon the active compound/compounds being formulated. Suitable surfactants are known in the art and are commercially available.

Suitable anionic surfactants can be both so-called water-soluble soaps and water-soluble synthetic surface-active compounds. Soaps which may be used include the alkali metal, alkaline earth metal or substituted or unsubstituted ammonium salts of higher fatty acid (C₁₀ to C₂₂), for example the sodium or potassium salt of oleic or stearic acid, or of natural fatty acid mixtures.

The surfactant may comprise an emulsifier, dispersant or wetting agent of ionic or nonionic type. Examples of such agents include salts of polyacrylic acids, salts of lignosulphonic acid, salts of phenylsulphonic or naphthalenesulphonic acids, polycondensates of ethylene oxide with fatty alcohols or with fatty acids or with fatty amines, substituted phenols, especially alkylphenols, sulphosuccinic ester salts, taurine derivatives, especially alkyltaurates, and phosphoric esters of polyethoxylated phenols or alcohols.

The presence of at least one surfactant is generally required when the active compound and/or the inert carrier and/or auxiliary/adjuvant are insoluble in water and the vehicle for the final application of the composition is water.

The composition may optionally further comprise one or more polymeric stabilizers. Suitable polymeric stabilizers that may be used in the present invention include, but are not limited to, polypropylene, polyisobutylene, polyisoprene, copolymers of monoolefins and diolefins, polyacrylates, polystyrene, polyvinyl acetate, polyurethanes or polyamides. Suitable stabilizers are known in the art and commercially available.

The surfactants and polymeric stabilizers mentioned above are generally believed to impart stability to the composition, in turn allowing the composition to be formulated, stored, transported and applied.

Suitable anti-foaming agents for use in the compositions include all substances which can normally be used for this purpose in agrochemical compositions. Suitable anti-foaming agents are known in the art and are available commercially. Particularly preferred antifoam agents are mixtures of polydimethylsiloxanes and per-fluoroalkylphosphonic acids, such as the silicone anti-foaming agents available from GE or Compton.

Suitable solvents for use in the compositions may be selected from all customary organic solvents which thoroughly dissolve the active compounds employed. Again, suitable organic solvents for (A), (B) and (C) are known in the art. The following may be mentioned as being preferred: N-methyl pyrrolidone, N-octyl pyrrolidone, cyclohexyl-1-pyrrolidone; and a mixture of paraffinic, isoparaffinic, cycloparaffinic and aromatic hydrocarbons (available commercially as SOLVESSO™200). Suitable solvents are commercially available.

Suitable preservatives include all substances which can normally be used for this purpose in agrochemical compositions of this type and again are well known in the art. Suitable examples that may be mentioned include PREVENTOL® (from Bayer AG) and PROXEL® (from Bayer AG).

The compositions may comprise an antioxidant. Suitable antioxidants are all substances which can normally be used for this purpose in agrochemical compositions, as is known in the art. Preference is given to butylated hydroxytoluene.

Suitable thickeners for use in the compositions include all substances which can normally be used for this purpose in agrochemical compositions. Examples include xanthan gum, PVOH, cellulose and its derivatives, clay hydrated silicates, magnesium aluminum silicates or a mixture thereof. Again, such thickeners are known in the art and available commercially.

The compositions may further comprise one or more solid adherents. Such adherents are known in the art and available commercially. They include organic adhesives, including tackifiers, such as celluloses of substituted celluloses, natural and synthetic polymers in the form of powders, granules, or lattices, and inorganic adhesives such as gypsum, silica, or cement.

In the method and use of the present invention, the combination of the active ingredients can be applied to the locus where control is desired, such as to the leaves of plants and/or the surrounding soil, by a convenient method. The "locus" refers to the place where the plants are growing, the place where the plant propagation materials of the plants are sown or the place where the plant propagation materials of the plants will be sown.

As noted above, the present invention also relates to the use of a combination of the active ingredients, for example in a composition or formulation as described above, for controlling or modifying the growth of undesirable vegetation in crops. The combination of the active ingredients is useful in treating a range of crops, including cereals, for example wheat, barley, rye, oats, maize, rice, sorghum, triticale and related crops; beet, for example sugar beet and fodder beet; fruit, such as pomes, stone fruit and soft fruit, for example apples, grapes, pears, plums, peaches, almonds, cherries, and berries, for example strawberries, raspberries and blackberries; leguminous plants, for example beans, lentils, peas, soybeans, peanuts; oil plants, for example rape, mustard, sunflowers; cucurbitaceae, for example marrows, cucumbers, melons; fibre plants, for example cotton, flax, hemp, jute; citrus fruit, for example oranges, lemons, grapefruit and mandarins; vegetables, for example spinach, lettuce, asparagus, cabbages, carrots, onions, tomatoes, potatoes, paprika; coffee; as well as ornamentals, such as flowers, shrubs, broad-leaved trees and evergreens, for example conifers.

In a preferred embodiment, the composition and/or method of the present invention is used for controlling growth of undesirable vegetation in cereals, preferably wheat, barley, rye, triticale and oat.

Suitable crops for treatment using the composition and method of the present invention include those which are tolerant to (A), (B) and/or (C). The tolerance can be a natural tolerance produced by selective breeding or can be artificially introduced by genetic modification of the crop. In this respect, tolerance means a low susceptibility to damage caused by a particular herbicide.

The compositions employed in the practice of the present invention can be applied in a variety of ways known to those skilled in the art, at various concentrations. The method and compositions of the present invention are useful in controlling the growth of undesirable vegetation by pre-planting, pre-emergence or post-emergence application to the locus where control is desired. The active ingredients may be applied to the leaves of the undesired plant by conventional methods including coating, spraying, sprinkling, dipping, soaking, injection, irrigation, and the like.

The method of the present invention may employ other pesticides, in addition to the combination of (A), (B) and/or (C). For example, compositions of the present invention may contain or be mixed with other pesticides, such as fungicides, insecticides and nematicides, growth factor enhancers and fertilizers, to enhance the activity of the present invention or to widen its spectrum of activity. Similarly, the method of the present invention may be employed in conjunction with the use of one or more of the aforementioned active ingredients, again to obtain an enhanced efficacy or broader spectrum of activity.

Embodiments of the present invention will now be described, for illustrative purposes only, by way of the following examples.

### Formation Examples

Water-dispersible granule (WG) was prepared by mixing and milling of active ingredients and auxiliaries (0.5% SUPRALATE® (sodium lauryl sulfate, Witco Inc., Greenwich), 5% REAX®88B (sodium lignosulfonate, Westvaco Corp), Potassium carbonate (balance to 100%)) under compressed air, then wetting, extruding and drying to obtain water-dispersible granule.

For reference example,

| | |
|---|---|
| Metribuzin | 45% |
| Metsulfuron-methyl | 0.75% |
| Florasulam | 1.5% |
| SUPRALATE® (sodium lauryl sulfate, Witco Inc., Greenwich) | 0.5% |
| REAX®88B (sodium lignosulfonate, Westvaco Corp) | 5% |
| Potassium carbonate | Balance to 100% |

Aqueous suspension concentrates (SC) were prepared by mixing finely ground active ingredients with auxiliaries (10% Propylene glycol, 5% Tristyrylphenol ethoxylates, 1% Sodium lignosulfonate, 1% Carboxymethylcellulose, 1% Silicone oil (in the form of a 75% emulsion in water), 0.1% Xanthan gum, 0.1% NIPACIDE BIT 20, Water (Balance to 1L).

### For example,

| | |
|---|---|
| Metribuzin | 45% |
| Tribenuron-methyl | 2.4% |
| Propylene glycol | 10% |
| Tristyrylphenol ethoxylates | 5% |
| Sodium lignosulfonate | 1% |
| Carboxymethylcellulose | 1% |
| Silicone oil (in the form of a 75% emulsion in water) | 1% |
| Xanthan gum | 0.1% |
| NIPACIDE BIT 20 | 0.1% |
| Water | Balance to 1L |

Oil-based suspension concentrates (OD) were prepared by dissolving active ingredients with auxiliaries (1.5% Sodium lignosulfonate, 1.5% Silicon dioxide, 1.5% Silicone oil, Vegetable oil (Balance to 1L)).

For reference example,

| | |
|---|---|
| Metribuzin | 20% |
| Metsulfuron-methyl | 0.4% |
| Tristyrylphenol ethoxylates | 7.5% |
| Sodium lignosulfonate | 1.5% |
| Silicon dioxide | 1.5% |
| Silicone oil | 1.5% |
| Vegetable oil | Balance to 100% |

Water-soluble granules (SG) were prepared by mixing and milling of active ingredients and auxiliaries (0.5% SUPRALATE® (sodium lauryl sulfate, Witco Inc., Greenwich), 5% REAX®88B (sodium lignosulfonate, Westvaco Corp), 2% Sodium hydrogen carbonate (NaHCO3), Potassium sulfate (balance to 100%)) under compressed air, then wetting, extruding and drying to obtain water-soluble granule.

### For example,

| | |
|---|---|
| Metribuzin | 30% |
| Thifensulfuron-methyl | 7.5% |
| Florasulam | 1.5% |
| SUPRALATE® (sodium lauryl sulfate, Witco Inc., Greenwich) | 0.5% |
| REAX® 88B (sodium lignosulfonate, Westvaco Corp) | 5% |
| Sodium hydrogen carbonate (NaHCO₃) | 2% |
| Potassium sulfate | Balance to 100% |

Formulations were prepared according to the method above (Table A) (examples 2, 6, 9, 12, 15, 18 and 21 are not according to the invention):

**Table A:**

| | | (A) | (B) | | | (C) |
|---|---|---|---|---|---|---|
| Example | Formulation | Metribuzin (%) | Metsulfuron-methyl (%) | Thifensulfuron-methyl (%) | Tribenuron-methyl (%) | Florasulam (%) |
| 1 | SC | 40 | / | / | / | / |
| 2 | WG | / | 20 | / | / | / |
| 3 | WG | / | / | 20 | / | / |
| 4 | WG | / | / | / | 20 | / |
| 5 | SC | / | / | / | / | 20 |
| 6 | OD | 20 | 0.4 | / | / | / |
| 7 | SG | 40 | / | 5 | / | / |
| 8 | SC | 40 | / | / | 2.5 | / |
| 9 | WG | 45 | 1.2 | / | / | 1.5 |
| 10 | SG | 30 | / | 7.5 | / | 1.5 |
| 11 | WG | 60 | / | / | 3.75 | 1.5 |
| 12 | OD | 25 | 0.5 | / | / | / |
| 13 | SG | 30 | / | 3 | / | / |
| 14 | WG | 45 | / | / | 2.4 | / |
| 15 | WG | 45 | 0.75 | / | / | 1.5 |
| 16 | SG | 20 | / | 5 | / | 0.5 |
| 17 | SC | 30 | / | / | 2.4 | 1.125 |
| 18 | OD | 20 | 0.2 | / | / | / |
| 19 | SG | 37.5 | / | 0.75 | / | / |
| 20 | WG | 45 | / | / | 1.05 | / |
| 21 | SC | 45 | 0.3 | / | / | 0.75 |
| 22 | SG | 30 | / | 0.75 | / | 0.3 |
| | WG | 45 | / | / | 1.05 | 0.15 |

### Biological Examples 1

Barley, wheat plants were sown side by side in the field. Different types of weeds and their relative density were recorded and are listed in Table 1 below. Formulations were applied 50 days after planting. After spraying the plants, the beds were maintained for about 2 weeks. Two weeks after application, the beds were examined to determine the efficiency of the treatment. The results are set forth below in Table 2 below.

**Table 1. Type of weed**

| **Type of weed** | **Relative density (%)** |
|---|---|
| Amsinckia/Yellow burweed (Amsinckia spp.) | 15 |
| Brassica napus (volunteer oilseed rape) | 20 |
| Dead-nettle (henbit) | 25 |
| Faba beans (Vicia faba) | 10 |
| Red deadnette | 5 |
| Spurrey (Corn) | 10 |
| Thistle (Creeping) | 10 |
| Viola arvensis (field pansy) | 5 |

**Table 2**

| | | | | **Efficiency (%)** | | | | | | | |
|---|---|---|---|---|---|---|---|---|---|---|---|
| **Formulation Examples** | **Active ingredients** | | | **Type of weed** | | | | | | | |
| | (A) (g/ha) | (B) (g/ha) | (C) (g/ha) | Amsinckia/Y ellow burweed | Brassica napus | Dead-nettle | Faba beans | Red deadnette | Spurrey | Thistle | Viola arvensis |
| Untreated | 0 | 0 | 0 | 0 | 0 | 0 | 0 | 0 | 0 | 0 | 0 |
| Example 1 | 400 | 0 | 0 | 40 | 45 | 40 | 40 | 35 | 40 | 45 | 45 |
| Example 2 | 0 | 8 | 0 | 45 | 40 | 35 | 35 | 35 | 40 | 45 | 45 |
| Example 3 | 0 | 50 | 0 | 45 | 45 | 40 | 40 | 40 | 45 | 45 | 40 |
| Example 4 | 0 | 25 | 0 | 40 | 40 | 35 | 35 | 40 | 40 | 45 | 40 |
| Example 6 | 400 | 8 | 0 | 90 | 85 | 85 | 90 | 90 | 95 | 95 | 90 |
| Example 7 | 400 | 50 | 0 | 85 | 90 | 90 | 90 | 90 | 95 | 90 | 95 |
| Example 8 | 400 | 25 | 0 | 90 | 90 | 85 | 90 | 85 | 90 | 95 | 95 |

Examples 2 and 6 in Table 2 are not according to the invention.

### Biological Examples 2

Wheat and rye plants were sown side by side in the field. Different types of weeds and their relative density were recorded and are listed in Table 1 below. Formulations were applied 50 days after planting. After spraying the plants, the beds were maintained for about 2 weeks. Two weeks after application, the beds were examined to determine the efficiency of the treatment. The results are set forth below in Table 4 below.

**Table 3. Type of weed**

| **Type of weed** | **Relative density (%)** |
|---|---|
| Common chickweed (Stellaria media) | 35 |
| Common sowthistle (Sonchus oleraceus) | 30 |
| Forget-me-not | 10 |
| Redshank (Polygonum persicaria) | 10 |
| Volunteer sunflower (Helianthus annuus) | 15 |

**Table 4. Efficiency (%)**

| | | | | **Efficiency (%)** | | | | |
|---|---|---|---|---|---|---|---|---|
| **Formulation Examples** | **Active ingredients** | | | **Type of weed** | | | | |
| | (A) (g/ha) | (B) (g/ha) | (C) (g/ha) | Common chickweed | Common sowthistle | Forget-me-not | Redshank | Volunteer sunflower |
| Untreated | 0 | 0 | 0 | 0 | 0 | 0 | 0 | 0 |
| Example 1 | 300 | 0 | 0 | 35 | 35 | 40 | 40 | 35 |
| Example 2 | 0 | 5 | 0 | 40 | 40 | 35 | 40 | 35 |
| Example 3 | 0 | 30 | 0 | 40 | 45 | 40 | 35 | 40 |
| Example 4 | 0 | 16 | 0 | 40 | 40 | 40 | 35 | 40 |
| Example 12 | 250 | 5 | 0 | 90 | 90 | 90 | 85 | 90 |
| Example 13 | 300 | 30 | 0 | 85 | 95 | 90 | 90 | 85 |
| Example 14 | 300 | 16 | 0 | 90 | 90 | 85 | 90 | 95 |

Examples 2 and 12 in Table 4 are not according to the invention.

### Biological Examples 3

Barley and oat plants were sown side by side in the field. Different types of weeds and their relative density were recorded and are listed in Table 5 below. Formulations were applied 50 days after planting. After spraying the plants, the beds were maintained for about 2 weeks. Two weeks after application, the beds were examined to determine the efficiency of the treatment. The results are set forth below in Table 6 below.

**Table 5. Type of weed**

| **Type of weed** | **Relative density (%)** |
|---|---|
| Broadleaf dock | 20 |
| Charlock (Sinapsis arvensis) | 25 |
| Fumitory | 10 |
| Groundsel | 10 |
| Mayweed | 20 |
| Speedwells | 15 |

**Table 6. Efficiency (%)**

| | | | | **Efficiency (%)** | | | | | |
|---|---|---|---|---|---|---|---|---|---|
| **Formulation Examples** | **Active ingredients** | | | **Type of weed** | | | | | |
| | (A) (g/ha) | (B) (g/ha) | (C) (g/ha) | Broadleaf dock | Charlock | Fumitory | Groundsel | Mayweed | Speedwells |
| Untreated | 0 | 0 | 0 | 0 | 0 | 0 | 0 | 0 | 0 |
| Example 1 | 300 | 0 | 0 | 40 | 35 | 40 | 40 | 35 | 35 |
| Example 2 | 0 | 2 | 0 | 40 | 40 | 35 | 40 | 40 | 35 |
| Example 3 | 0 | 5 | 0 | 40 | 45 | 35 | 35 | 40 | 40 |
| Example 4 | 0 | 7 | 0 | 40 | 35 | 40 | 35 | 40 | 40 |
| Example 18 | 200 | 2 | 0 | 90 | 90 | 85 | 85 | 90 | 90 |
| Example 19 | 250 | 5 | 0 | 85 | 95 | 90 | 90 | 85 | 90 |
| Example 20 | 300 | 7 | 0 | 90 | 90 | 85 | 95 | 90 | 85 |

Examples 2 and 18 in Table 6 are not according to the invention.

### Biological Examples 4

Rye, triticale and oat plants were sown side by side in the field. Different types of weeds and their relative density were recorded and are listed in Table 7 below. Formulations were applied 50 days after planting. After spraying the plants, the beds were maintained for about 2 weeks. Two weeks after application, the beds were examined to determine the efficiency of the treatment. The results are set forth below in Table 8 below.

**Table 7. Type of weed**

| **Type of weed** | **Relative density (%)** |
|---|---|
| Dock (Broadleaf) (Rumex obtusifolius) | 10 |
| Fat-hen (Chenopodium album) | 25 |
| Poppy (Papaver rhoeas) | 5 |
| Scanted mayweed (Matricaria chamomilla) | 20 |
| Scentless mayweed (Matricaria perforata) | 15 |
| Cleavers (Galium aparine) | 10 |
| common chickweed (Stellaria media) | 10 |
| Shepherd's purse (Capsella bursa-pastoris) | 5 |

Examples 2, 9 and 21 in Table 8 are not according to the invention.

**Table 8. Efficiency (%)**

| | | | | **Efficiency (%)** | | | | | | | |
|---|---|---|---|---|---|---|---|---|---|---|---|
| **Formulation Examples** | **Active ingredients** | | | **Type of weed** | | | | | | | |
| | (A) (g/ha) | (B) (g/ha) | (C) (g/ha) | Dock | Fat-hen | Poppy | Scanted mayweed | Scentless mayweed | Cleavers | common chickweed | Shepherd's purse |
| Untreated | 0 | 0 | 0 | 0 | 0 | 0 | 0 | 0 | 0 | 0 | 0 |
| Example 1 | 400 | 0 | 0 | 40 | 45 | 40 | 40 | 35 | 40 | 45 | 45 |
| Example 2 | 0 | 8 | 0 | 45 | 40 | 35 | 35 | 35 | 40 | 45 | 45 |
| Example 3 | 0 | 50 | 0 | 45 | 45 | 40 | 40 | 40 | 45 | 45 | 40 |
| Example 4 | 0 | 25 | 0 | 40 | 40 | 35 | 35 | 40 | 40 | 45 | 40 |
| Example 5 | 0 | 0 | 10 | 40 | 40 | 40 | 35 | 45 | 40 | 35 | 35 |
| Example 9 | 300 | 8 | 10 | 100 | 100 | 100 | 95 | 95 | 100 | 100 | 100 |
| Example 10 | 200 | 50 | 10 | 100 | 100 | 95 | 100 | 100 | 95 | 95 | 100 |
| Example 11 | 400 | 25 | 10 | 100 | 95 | 95 | 100 | 100 | 100 | 95 | 100 |
| Example 21 | 300 | 2 | 5 | 100 | 100 | 100 | 95 | 95 | 100 | 95 | 100 |
| Example 22 | 200 | 5 | 2 | 100 | 100 | 95 | 100 | 95 | 95 | 95 | 100 |
| Example 23 | 300 | 7 | 1 | 100 | 95 | 100 | 100 | 100 | 100 | 95 | 100 |

## Claims

1. A composition comprising a herbicidally effective amount of (A) metribuzin, (B) thifensulfuron-methyl and/or tribenuron-methyl, and optionally (C) one or more triazolopyrimidines.

2. The composition according to claim 1, wherein the weight ratio of component (A) to component (B) is in the range of from 1000:1 to 1:20.

3. The composition according to claim 1 or 2, wherein the weight ratio of component (A) to component (C) is in the range of from 1000:1 to 5:1.

4. The composition according to any preceding claim, wherein the total amount of (A), (B) and optionally (C) is from 5% to 99% by weight of the composition.

5. The composition according to claim 4, wherein the composition comprises, by weight, from 5% to 80% by weight of (A), from 0.05% to 50% by weight of (B), and optionally from 0.05% to 50% by weight of (C).

6. The composition according to any preceding claim, wherein (C) is selected from the group consisting of: cloransulam, diclosulam, florasulam, flumetsulam and metosulam.

7. The composition according to any preceding claim, further comprising one or more auxiliaries selected from extenders, carriers, solvents, surfactants, stabilizers, anti-foaming agents, anti-freezing agents, preservatives, antioxidants, colorants, thickeners, solid adherents, fillers, wetting agents, dispersing agents, lubricants, anticaking agents, deformers and diluents.

8. The composition according to any preceding claim, being formulated as a water-soluble concentrate (SL), an emulsifiable concentrate (EC), an emulsion (EW), a micro-emulsion (ME), a suspension concentrate (SC), an oil-based suspension concentrate (OD), a flowable suspension (FS), a water-dispersible granule (WG), a water-soluble granule (SG), a water-dispersible powder (WP), a water soluble powder (SP), a granule (GR), an encapsulated granule (CG), a fine granule (FG), a macrogranule (GG), an aqueous suspo-emulsion (SE), a capsule suspension (CS) or a microgranule (MG).

9. A method of controlling undesirable vegetation in plants comprising applying to the vegetation or to the locus thereof a herbicidally effective amount of a herbicidal composition of any of the preceding claims.

10. The method according to claim 9, wherein the plant growth is being controlled in a crop comprising cereals.

11. The method according to either claim 9 or 10, wherein the plant growth being controlled is of one or more of African turnip weed (Sisymbrium thellungii), Amsinckia/Yellow burweed (Amsinckia spp.), Ball mustard (Neslia paniculata), Black-bindweed, Black-grass, Boggabri weed/Dwarf amaranth (Amaranthus macrocarpus), Brassica napus (volunteer oilseed rape), Broadleaf dock, Bugloss, Calomba daisy (Pentzia suffruticosa), Cape tulip (Homeria spp.), Charlock (Sinapsis arvensis), Chickpeas (Volunteer) (Cicer arietinum), Chicory (Cichorium intybus), Cleavers (Galium aparine), Clover (Subterranean) (Trifolium subterraneum), common chickweed (Stellaria media), Common couch, Common Field-speedwell, Common Hemp-nettle, Common Orache, Common sowthistle (Sonchus oleraceus), Corn Marigold, Cutleaf mignonette (Reseda lutea), Dead-nettle (henbit), Denseflower fumitory (Fumaria densiflora), Dock (Broadleaf) (Rumex obtusifolius), Faba beans (Vicia faba), Fat-hen (Chenopodium album), Field Pansy, Field peas (Pisum sativum), Forget-me-not, Fumitory, Geranium spp. (cranesbill), Groundsel, Hare's ear/Treacle mustard (Conringia orientalis), Hedge mustard (Sisymbrium officinale), Hemp-nettle, Hogweed/Wireweed (Polygonum aviculare), Indian hedge mustard (Sisymbrium orientale), Knotgrass, Large flowered, Lincoln weed (Diplotaxis tenuifolia), Lupins (Lupinus albus), Mallee catchfly (Silene apetala), Mayweed, Meadow-grass (Annual), Medic (Medicago spp.), Mercury (Annual), Mignonette (Wild), Nettle (Small), New Zealand spinach (Tetragonia tetragonoides), Nightshade (Black), Oilseed rape volunteers, Orache, Pansy (field), parsley-piert, Parthenium weed (Pathenium hysterophorus), Paterson's curse/ Salvation Jane (Echium plantagineum), Penny-cress (Field), Persicaria (Pale), Pimpernel (Scarlet), Poppy (Papaver rhoeas), Prickly lettuce (Lactuca serriola), Radish (Wild), Red deadnettle (Lamium purpureum), Red pigweed (Portulaca oleracea), Redshank (Polygonum persicaria), Rough poppy (Papaver hybridum), Rye-grass (Perennial), Saltbush (Atriplex muelleri), Scanted mayweed (Matricaria chamomilla), Scentless mayweed (Matricaria perforata), Shephard's-needle, Shepherd's purse (Capsella bursa-pastoris), Skeleton weed (Suppression only) (Chondrilla juncea), Slender celery (Apium leptophyllum), Smallflower fumitory (Fumaria parviflora), Sorrel (Rumex acetoxella), Sorrel (Sheep's), Soursob (Oxalis pes-caprae), Sow-thistle (Smooth), Speedwells, Spiny Emex/ Doublegee/ Threecornered Jack (s) (Emex australis), Spurge (Sun), Spurrey (Corn), Stagger weed (Stachys arvensis), Stocksbill/Wild geranium (Erodium spp.), Thistle (Creeping), Turnip weed (Rapistrum rugosum), Viola arvensis (field pansy), Volunteer oilseed rape (Brassica napus), Volunteer sunflower (Helianthus annuus), Wild/Crow garlic (Allium vineale), Wild radish (Raphanus raphanistrum), Wild turnip (Brassica tournefortii), Wild-Oat, especially Amsinckia/Yellow burweed (Amsinckia spp.), Brassica napus (volunteer oilseed rape), Broadleaf dock, Charlock (Sinapsis arvensis), Cleavers (Galium aparine), common chickweed (Stellaria media), Common sowthistle (Sonchus oleraceus), Dead-nettle (henbit), Dock (Broadleaf) (Rumex obtusifolius), Faba beans (Vicia faba), Fat-hen (Chenopodium album), Forget-me-not, Fumitory, Groundsel, Mayweed, Poppy (Papaver rhoeas), Red deadnette, Redshank (Polygonum persicaria), Shepherd's purse (Capsella bursa-pastoris), Speedwells, Spurrey (Corn), Thistle (Creeping), Viola arvensis (field pansy), Volunteer sunflower (Helianthus annuus), Scanted mayweed (Matricaria chamomilla), Scentless mayweed (Matricaria perforata).

12. The method according to any of claims 9-11, wherein the composition is applied at an application rate of 10 grams/hectare (g/ha) to : 5000 g/ha, preferably at an application rate of from 30 g/ha to t 1000 g/ha.

13. The method according to any of claims 9 - 12, wherein the composition is applied pre-planting, pre-emergence and/or post-emergence.

14. A method of controlling plant growth at a locus comprising applying to the locus herbicidally effective amounts of a composition according to any of the claims 1 to 8,
preferably
wherein the plant growth is being controlled in a crop comprising cereals, particularly Amsinckia/Yellow burweed (Amsinckia spp.), Brassica napus (volunteer oilseed rape), Broadleaf dock, Charlock (Sinapsis arvensis), Cleavers (Galium aparine), common chickweed (Stellaria media), Common sowthistle (Sonchus oleraceus), Dead-nettle (henbit), Dock (Broadleaf) (Rumex obtusifolius), Faba beans (Vicia faba), Fat-hen (Chenopodium album), Forget-me-not, Fumitory, Groundsel, Mayweed, Poppy (Papaver rhoeas), Red deadnette, Redshank (Polygonum persicaria), Shepherd's purse (Capsella bursa-pastoris), Speedwells, Spurrey (Corn), Thistle (Creeping), Viola arvensis (field pansy), Volunteer sunflower (Helianthus annuus), Scanted mayweed (Matricaria chamomilla), Scentless mayweed (Matricaria perforata).

15. The method according to either of claims 9 to 14, wherein the components (A), (B) and optionally (C) are applied to the locus at the same time or consecutively.

## Patentansprüche

1. Zusammensetzung, die eine herbizid wirksame Menge von (A) Metribuzin, (B) Metsulfuron-methyl und/oder Triflusulfuron-methyl und/oder Tribenuron-methyl, und optional (C) ein oder mehrere Triazolopyrimidine umfasst.

2. Zusammensetzung nach Anspruch 1, worin das Gewichtsverhältnis der Komponente (A) zu Komponente (B) in dem Bereich von 1000:1 bis 1:20 ist.

3. Zusammensetzung nach Anspruch 1 oder 2, worin das Gewichtsverhältnis der Komponente (A) zu Komponente (C) in dem Bereich von 1000:1 bis 5:1 ist.

4. Verbindung nach einem der vorstehenden Ansprüche, worin die Gesamtmenge von (A), (B) und optional (C) von 5 bis 99 Gew.-% der Zusammensetzung ist.

5. Zusammensetzung nach Anspruch 4, worin die Zusammensetzung bezogen auf das Gewicht, von 5 bis 80 Gew.-% von (A), von 0.05 bis 50 Gew.-% von (B) und optional von 0.05 bis 50 Gew.-% von (C) umfasst,.

6. Zusammensetzung nach einem der vorstehenden Ansprüche, worin (C) ausgewählt ist aus der Gruppe bestehend aus Cloransulam, Diclosulam, Florasulam, Flumetsulam und Metosulam.

7. Zusammensetzung nach einem der vorstehenden Ansprüche, welche weiter eine oder mehrere Hilfsstoffe umfasst, ausgewählt unter Streckmitteln, Trägerstoffen, Lösungsmitteln, oberflächenaktiven Stoffen, Stabilisatoren, Anti-Schaummitteln, Frostschutzmitteln, Konservierungsstoffen, Antioxidanzien, Farbstoffen, Verdickungsmitteln, festen Haftstoffen, Füllstoffen, Benetzungsmitteln, Dispersionsmitteln, Schmierstoffen, Trennmitteln, entformenden Stoffen und Verdünnungsmitteln.

8. Zusammensetzung nach einem der vorstehenden Ansprüche, die als ein wasserlösliches Konzentrat (SL), ein emulgierbares Konzentrat (EC), eine Emulsion (EW), eine Micro-Emulsion (ME), ein Suspensions-Konzentrat (SC), ein Öl-basiertes Suspension-Konzentrat (OD), eine fließfähige Suspension (FS), ein wasserdispergierbares Granulat (WG), ein wasserlösliches Granulat (SG), ein wasserdispergierbares Pulver (WP), ein wasserlösliches Pulver (SP), ein Granulat (GR), ein verkapseltes Granulat (CG), ein feines Granulat (FG), ein Macro-Granulat (GG), eine wässrige Suspo-Emulsion (SE), eine verkapselte Suspension (CS) oder ein Micro-Granulat (MG) formuliert ist.

9. Verfahren zur Steuerung unerwünschter pflanzlicher Vegetation, welches umfasst, Auftragen auf die Vegetation oder den Standort davon einer herbizid wirksamen Menge einer herbiziden Zusammensetzung einer der vorstehenden Ansprüche.

10. Verfahren nach Anspruch 9, wobei das pflanzliche Wachstum in einem Erntegut, welches Getreide umfasst, gesteuert wird.

11. Verfahren nach Anspruch 9 oder 10, wobei das gesteuerte Pflanzen-Wachstum von einem oder mehreren ist von: Afrikanischem Rübenkraut (Sisymbrium thellungii), Amsinckia/Gelbklette (Amsinckia spp.), Finkensame (Neslia paniculata), Windenknöterich, Acker-Fuchsschwanz, Boggabri Kraut/Zwerg-Amaranth (Amaranthus macrocarpus), Brassica napus (Raps), Stumpfblättriger Ampfer, Ochsenzunge, Calomba-Gänseblümchen (Pentzia suffruticosa), Kapptulpe (Homeria spp.), Acker-Senf (Sinapsis arvensis), Kichererbse (Volunteer) (Cicer arietinum), Gemeine Wegwarte (Cichorium intybus), Kletten-Labkraut (Galium aparine), Bodenfrüchtiger Klee (unterirdisch) (Trifolium subterraneum), Gewöhnliche Vogelmiere (Stellaria media), Kriech-Quecke, Persischer Ehrenpreis, Gemeiner Hohlzahn, Spreizende Melde, Gemüse-Gänsedistel (Sonchus oleraceus), Saat-Wucherblume, Gelber Wau (Reseda lutea), Stängelumfassende Taubnessel (henbit), Dichtblütiger Erdrauch (Fumaria densiflora), Stumpfblättriger Ampfer (Broadleaf) (Rumex obtusifolius), Ackerbohne (Vicia faba), Weißer Gänsefuß (Chenopodium album), Acker-Stiefmütterchen, Speiseerbse (Pisum sativum), Vergissmeinnicht, Erdrauch, Geranium spp. (Storchschnäbel), Greiskräuter, Orientalischer Ackerkohl (Conringia orientalis), Weg-Rauke (Sisymbrium officinale), Hohlzahn, Vogelknöterich (Polygonum aviculare), Orientalische Rauke (Sisymbrium orientale), Vogelknöteriche, Großbättigrer, Schmalblättriger Doppelsame (Diplotaxis tenuifolia), Weiße Lupine (Lupinus albus), Leimkraut (Silene apetala), Hundskamille, Rispengräser (Annual), Schneckenklee (Medicago spp.), Bingelkräuter (jährlich), Wau (Wild), Kleine Brennnessel, Neuseeländer Spinat (Tetragonia tetragonoides), Schwarzer Nachtschatten, Raps, Melden, Acker-Stiefmütterchen, Gewöhnlicher Ackerfrauenmantel, Karottenkraut (Pathenium hysterophorus), Wegerichblättriger Natternkopf (Echium plantagineum), Acker-Hellerkraut, Ampfer-Knöterich, Acker-Gauchheil, Klatschmohn (Papaver rhoeas), Stachel-Lattich (Lactuca serriola), Acker-Rettich, Purpurrote Taubnessel (Lamium purpureum), Portulak (Portulaca oleracea), Floh-Knöterich (Polygonum persicaria), Krummborstiger Mohn (Papaver hybridum), Deutsches Weidelgras, Müller-Melde (Atriplex muelleri), Echte Kamille (Matricaria chamomilla), Geruchlose Kamille (Matricaria perforata), Venuskamm, Gewöhnliches Hirtentäschel (Capsella bursa-pastoris), Großer Knorpellattich (nur Unterdrückung) (Chondrilla juncea), Sumpf-Petersilie (Apium leptophyllum), Kleinblütiger Erdrauch (Fumaria parviflora), Kleiner Sauerampfer (Rumex acetoxella), Zwerg-Sauerampfer, Nickender Sauerklee (Oxalis pes-caprae), Gemüse-Gänsedistel, Ehrenpreis, südlicher Stechampfer (Emex australis), Sonnwend-Wolfsmilch, Acker-Spark, Acker-Ziest (Stachys arvensis), Reiherschnäbel (Erodium spp.), Acker-Kratzdistel, Runzel-Rapsdotter (Rapistrum rugosum), Acker-Stiefmütterchen, Raps (Brassica napus), Sonnenblume (Helianthus annuus), Weinberg-Lauch (Allium vineale), Acker-Rettich (Raphanus raphanistrum), Afrikanischer Senf (Brassica tournefortii), Wilder Hafer, insbesondere Amsinckia/Gelbklette (Amsinckia spp.), Brassica napus (Raps), Stumpfblättriger Ampfer, Acker-Senf (Sinapsis arvensis), Kletten-Labkraut (Galium aparine), Gewöhnliche Vogelmiere (Stellaria media), Gemüse-Gänsedistel (Sonchus oleraceus), Stängelumfassende Taubnessel (henbit), Stumpfblättriger Ampfer (Rumex obtusifolius), Ackerbohne (Vicia faba), Weißer Gänsefuß (Chenopodium album), Vergissmeinnicht, Erdrauch, Greiskräuter, Kamille, Klatschmohn (Papaver rhoeas), Purpurrote Taubnessel, Floh-Knöterich (Polygonum persicaria), gewöhnliches Hirtentäschel (Capsella bursa-pastoris), Ehrenpreise, Acker-Spark, Acker-Kratzdistel, Acker-Stiefmütterchen, Sonnenblume (Helianthus annuus), Echte Kamille (Matricaria chamomilla), Geruchlose Kamille (Matricaria perforata).

12. Verfahren nach einem der Ansprüche 9 bis 11, wobei die Zusammensetzung in einem in einer Auftragungs-Menge von 10 Gramm/Hektar (g/ha) bis zu etwa 5000 g/ha, vorzugsweise in einer Auftragungs-Menge von etwa 30 g/ha bis etwa 1000 g/ha ausgebracht wird.

13. Verfahren nach einem der Ansprüche 9 bis 12, wobei die Zusammensetzung vor dem Pflanzen, vor dem Auswachsen oder nach dem Auswachsen ausgebracht wird.

14. Verfahren zum Steuern pflanzlichen Wachstums an einem Standort, welches Ausbringen einer herbizid wirksamen Menge einer Verbindung nach einem der Ansprüche 1 bis 8 auf den Standort umfasst,
vorzugsweise
wobei das pflanzliche Wachstum in einem Erntegut, welches Getreide umfasst, gesteuert wird, insbesondere Amsinckia/ Gelbklette (Amsinckia spp.), Brassica napus (Raps), Stumpfblättriger Ampfer, Acker-Senf (Sinapsis arvensis), Kletten-Labkraut (Galium aparine), Gewöhnliche Vogelmiere (Stellaria media), Gemüse-Gänsedistel (Sonchus oleraceus), Stängelumfassende Taubnessel (henbit), Stumpfblättriger Ampfer (Rumex obtusifolius), Ackerbohne (Vicia faba), Weißer Gänsefuß (Chenopodium album), Vergissmeinnicht, Erdrauch, Greiskräuter, Kamille, Klatschmohn (Papaver rhoeas), Purpurrote Taubnessel, Flo-Knöterich (Polygonum persicaria), Gewöhnliches Hirtentäschel (Capsella bursa-pastoris), Ehrenpreise, Acker-Spark, Acker-Kratzdistel, Acker-Stiefmütterchen, Sonnenblume (Helianthus annuus), Echte Kamille (Matricaria chamomilla), Geruchlose Kamille (Matricaria perforata).

15. Verfahren nach einem der Ansprüche 9 bis 14, wobei die Komponenten (A), (B) und optional (C) zur gleichen Zeit oder nacheinander auf dem Standort ausgebracht werden.

## Revendications

1. Composition comprenant une quantité efficace d'herbicide de métribuzine (A), de thifensulforon-méthyle et / ou de tribénuron-méthyle (B), et éventuellement d'un ou plusieurs triazolopyrimidines (C).

2. Composition selon la revendication 1, dans laquelle le rapport en poids du composant (A) au composant (B) est compris dans l'intervalle allant de 1000 : 1 à 1 : 20.

3. Composition selon la revendication 1 ou 2, dans laquelle le rapport en poids du composant (A) au composant (B) est compris dans l'intervalle allant de 1000 : 1 à 5 : 1.

4. Composition selon l'une quelconque des revendications précédentes, dans laquelle la quantité totale de (A), (B) et éventuellement de (C) est comprise entre 5% et 99% du poids de la composition.

5. Composition selon la revendication 4, dans laquelle la composition comprend, en poids, de 5% à 80% en poids de (A), de 0,05% à 50% en poids de (B) et facultativement de 0,05% à 50% en poids de (C).

6. Composition selon l'une quelconque des revendications précédentes, dans laquelle (C) est choisi parmi le groupe constitué par : le cloransulame, le diclosulame, le florasulame et le métosulame.

7. Composition selon l'une quelconque des précédentes revendications, comprenant en outre un ou plusieurs auxiliaires choisis parmi le groupe des diluants, des solvants, des tensioactifs, des stabilisants, des agents anti-moussants, des agents antigels, des conservateurs, des antioxydants, des colorants, des épaississants, des adhérents solides, des charges, des agents mouillants, des agents de dispersion, des lubrifiants, des agents antiagglomérants, des déformants et des diluants.

8. Composition selon l'une quelconque des revendications précédentes, formulée sous la forme d'un concentré soluble dans l'eau (SL), d'un concentré émulsifiable (EC), d'une émulsion (EW), d'une microémulsion (ME), d'un concentré en suspension (SC), d'un concentré de suspension à base d'huile, une suspension fluide (FS), un granule dispersable dans l'eau (WG), un granule soluble dans l'eau (SG), une poudre dispersable dans l'eau (WP), une poudre soluble dans l'eau (SP), un granule (GR), un granule encapsulé (CG), un granule fin (FG), un macrogranule (GG), une suspo-émulsion aqueuse (SE), une suspension de capsules (CS) ou un microgranule (MG).

9. Procédé de contrôle de la végétation indésirable chez les plantes, comprenant l'application sur la végétation ou à son emplacement d'une composition herbicide en quantité efficace selon l'une quelconque des revendications précédentes.

10. Procédé selon la revendication 9, dans lequel la croissance des plantes est contrôlée dans une culture comprenant des céréales.

11. Procédé selon la revendication 9 ou 10, dans lequel la croissance d'une ou plusieurs des plantes est contrôlée parmi le Navet d'Afrique (Sisymbrium thellungii), Amsinckia / Amarante jaune (Amsinckia spp.), Moutarde blanche (Neslia paniculata), Liseron noir, Herbe noire, herbe de Boggabri / amarante naine (Amaranthus macrocarpus), Brassica napus (colza spontané), Patience à feuilles obtuses, Vipérine commune, marguerite de Calomba (Pentzia suffruticosa), tulipe du Cap (Homeria spp.), Moutarde des champs (Sinapsis arvensis), Pois chiche (spontané) (Cicer arietinum), Chicorée (Cichorium intybus), Gaillet gratteron (Galium aparine), Trèfle (souterrain) (Trifolium subterraneum), Renoncule des prés (Stellaria media), chiendent, Véronique commune, Ortie épineuse, Atriplex patula, Laiteron maraîcher (Sonchus oleraceus), Chrysanthème des moissons, Réséda jaune (Reseda lutea), Lamier (henbit), Fumeterre (Fumaria densiflora), Patience à feuilles obtuses (dicotylédone) (Rumex obtusifolius), Fèves (Vicia faba), Chénopode blanc (Chenopodium album), pensée de champ, Pois protéagineux (Pisum sativum). Myosotis, Fumeterre, Geranium spp. (Cranesbill), Séneçon commun, Vélar fausse Giroflée (Conringia orientalis), Sisymbre officinal (Sisymbrium officinale), Galéopsis tétrahit, Berce / Renouée Traînasse (Polygonum aviculare), roquette orientale (Sisymbrium orientale), Renouée, Diplotaxis à feuilles étroites (Diplotaxis tenuifolia), Lupins (Lupinus albus), Mallee catchfly (Silene apetala), Matricaire, Pâturin annuel (Annuel), Luzerne (Medicago spp.), Mercure (Annuel), Réséda (Sauvage), Ortie (Petite), Épinards de Nouvelle Zélande (Tetragonia tetragonoides), Solanacées (Noir), Colza spontané, Ora Atriplex, Pensée (des champs), Aphanes, Grande camomille (Pathenium hysterophorus), Vipérine faux-plantain / herbe cendrée (Echium plantagineum), tabouret (des champs), Persicaire (Pâle), Mouron rouge, Pavot (Papaver rhoeas), Laitue sauvage (Lactuca serriola), Radis (Sauvage), Lamier pourpre (Lamium purpureum), Amarante à feuilles rouges (Portulaca oleracea), Renouée persicaire (Polygon persicaria), coquelicot (Papaver hybridum), Ray-grass anglais (vivace), Atriplex (Atriplex muelleri), Camomille sauvage (Matricaria chamomilla), Matricaire perforée (Matricaria perforata), scandix peigne de Vénus, Capselle bourse-à-pasteur (Capsella bursa-pastoris), Chondrille à feuilles de joncs (Chondrilla juncea), céleri (Apium leptophyllum), Fumeterre à petites fleurs (Fumaria parviflora), Oseille (Rumex acetoxella), Petite oseille, oxalis pied de chèvre (Oxalis pes-caprae), Laiteron maraîcher (Lisse), Véronique, épine du diable / Double gee / Threecornered (Emex australis), Synadenium (Soleil), Spurrey (Maïs), Spergule des champs, plante à épi (Stachys arvensis), Géranium sauvage (Erodium spp.), Chardon (Cirse des champs), moutardes (Rapistrum rugosum), Viola arvensis (Pensée des champs), Colza spontané (Brassica napus), Tournesol spontané (Helianthus annuus), ail sauvage / des vignes (Allium vineale), radis sauvage (Raphanus raphanistrum), navet sauvage (Brassica tournefortii), folle avoine, en particulier Amsinckia / amarante jaune (Amsinckia spp.), Brassica napus (colza spontané), Patience à feuilles obtuses, Moutarde des champs (Sinapsis arvensis), Gaillet gratteron (Galium aparine), Stellaire intermédiaire (Stellaria media), Laiteron maraîcher (Sonchus oleraceus), Lamier (henbit), Patience à feuilles obtuses (dicotylédone) (Rumex obtusifolius), Fèves (Vicia faba), Chénopode blanc (Chenopodium album), Myosotis, Fumeterre, Matricaire, Pavot (Papaver rhoeas), Lamier pourpre (Polygonum persicaria), Coquelicot (Papaver rhoeas), Capselle bourse-à-pasteur (Capsella bursa-pastoris), Véronique, Spergula (maïs), Chardon (Cirse des champs), Viola arvensis (Pensée des champs), Tournesol spontané (Helianthus annuus), Camomille sauvage (Matricaria chamomilla), Matricaire perforée (Matricaria perforata).

12. Procédé selon l'une quelconque des revendications 9 à 11, dans lequel la composition est appliquée à un taux d'application de 10 grammes/hectare (g/ha) à 5000 g / ha, de préférence à un taux d'application compris entre 30 g/ha et 1000 g/ha.

13. Procédé selon l'une quelconque des revendications 9 à 12, dans lequel la composition est appliquée avant la plantation, la prélevée et / ou la postlevée.

14. Procédé de contrôle de la croissance des plantes à un emplacement précis comprenant l'application sur l'emplacement de quantités efficaces d'une composition d'herbicide selon l'une quelconque des revendications 1 à 8,
de préférence
dans lequel la croissance des plantes est contrôlée dans une culture comprenant des céréales, en particulier Amsinckia / Amarante jaune (Amsinckia spp.), Brassica napus (colza spontané), Patience à feuilles obtuses, Moutarde des champs (Sinapsis arvensis), Gaillet gratteron (Galium aparine), Renoncule des prés (Stellaria media), Laiteron maraîcher (Sonchus oleraceus), Lamier (Henbit), Patience à feuilles obtuses (dicotylédone) (Rumex obtusifolius), Fèves (Vicia faba), Chénopode blanc (Chenopodium album), Myosotis, Fumeterre, Séneçon commun, Matricaire, Pavot (Papaver rhoeas), Lamier pourpre (Polygonum persicaria), Capselle bourse-à-pasteur (Capsella bursa-pastoris), Véronique, Spergula (maïs), Chardon (Cirse des champs), Viola arvensis (Pensée des champs), Tournesol spontané (Helianthus annuus), Camomille sauvage (Matricaria chamomilla), Matricaire perforée (Matricaria perforata).

15. Procédé selon l'une quelconque des revendications 9 à 14, dans lequel les composants (A), (B) et éventuellement (C) sont appliqués à l'emplacement en même temps ou de manière consécutive.
